# EUROPÄISCHE PATENTANMELDUNG

(11) **EP 1 378 984 A1**
(43) Veröffentlichungstag der Anmeldung: **07.01.2004**
(21) Anmeldenummer: 02014719.5
(22) Anmeldetag: 03.07.2002
(51) Int. Cl.: H02K 7/06, H02K 11/00, G01C 9/12

(54) **Vibrator mit integrierter Positionsbestimmung**

(71) Anmelder: SIEMENS AKTIENGESELLSCHAFT, 80333 München (DE)
(72) Erfinder: Feil, Henry, 81545 München (DE)

(57) **Zusammenfassung**

Die vorliegende Erfindung betrifft einen Vibrator mit einem Motor 1 mit einer Rotorwelle 2, einem an der Rotorwelle angebrachten Gewicht 4 zum Erzeugen einer Vibration und Mittel zum Bestimmen der Ausrichtung des Gewichts. Die Ausrichtung des Gewichts durch die Gravitationskraft der Erde g in Drehrichtung in die Rotorwelle wird im Vergleich zu einer vorgegebenen Lage bestimmt. In einer bevorzugten Ausführungsform weisen die Mittel zum Bestimmen mehrere an der Rotorwelle angebrachte Schleifkontakte auf.

## Beschreibung

Die vorliegende Erfindung betrifft einen Vibrator mit integrierter Positionsbestimmung und ein mobiles Endgerät, welches einen entsprechenden Vibrator aufweist.

Derartige Vibratoren können grundsätzlich in jeder Art von Endgerät, beispielsweise in einem Mobilfunk-Endgerät, Anwendung finden.

Vibratoren werden in Endgeräten, insbesondere in Mobilfunk-Endgeräten, zur Signalisierung eines eingehenden Anrufes bzw. zum Eingang einer Kurzmitteilung verwendet. Vibratoren haben dabei den Vorteil, dass nur dem Nutzer des Endgeräts eine Aktion signalisiert wird, wohingegen andere Personen, nicht, wie dies beispielsweise bei einem Klingelton der Fall ist, gestört werden.

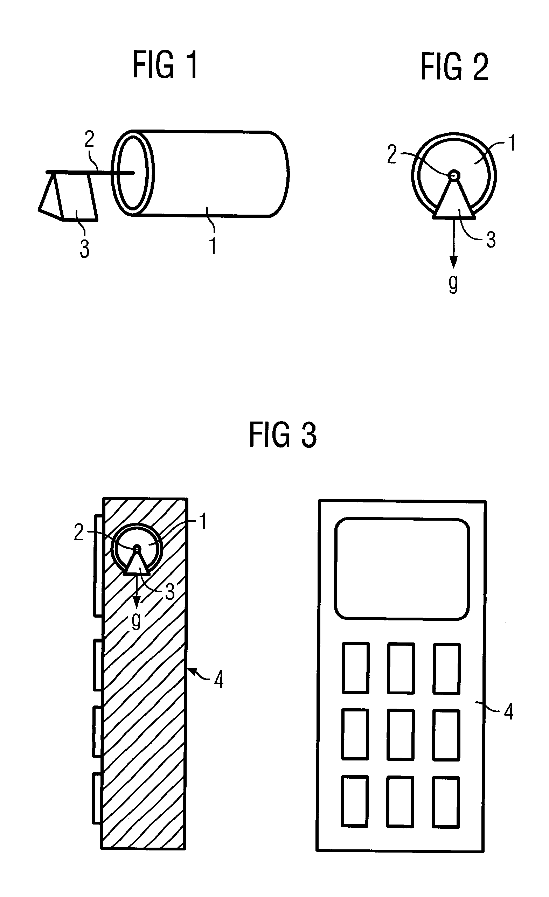

Der Aufbau eines bekannten Vibrators ist in den Figuren 1 und 2 gezeigt. Der Vibrator weist einen elektrischen Motor 1, eine Rotorwelle 2 und ein exzentrisches Gewicht 3 auf. Der elektrische Motor 1 versetzt die Rotorwelle 2 in Bewegung, wodurch das Gewicht 3 um die Rotorwelle rotiert und eine Vibrationsbewegung in dem Endgerät verursacht.

Bei einer Vielzahl von neuen Anwendungen für mobile Endgeräte ist es wünschenswert, über die Lage des mobilen Endgeräts Bescheid zu wissen. Beispielsweise ist es denkbar, bei einem an einem Halsband in Brusthöhe getragenem Mobilfunk-Endgerät, die Darstellung auf dem Anzeigefeld des Mobilfunk-Endgeräts in Abhängigkeit von der Lage des Mobilfunk-Endgeräts zu drehen.

Für eine Erkennung der Lage des Endgeräts sind spezielle Sensoren, sogenannte Mikroelektromechanische Bewegungssensoren MEMS (Microelectromechanical Motion Sensors), einsetzbar. Solche Sensoren benötigen jedoch relativ viel Platz und stehen einer weiteren Miniaturisierung von Mobilfunk-Endgeräten entgegen. Darüber hinaus sind sie auch relativ teuer.

Somit liegt der vorliegenden Erfindung die Aufgabe zugrunde, eine Lageerkennung eines Endgerats zu ermöglichen, wobei diese kostengünstig und platzsparend realisiert werden soll.

Diese Aufgabe wird durch einen Vibrator mit den Merkmalen des Patentanspruchs 1 und einem Endgerät mit den Merkmalen des Patentanspruchs 9 gelöst. Vorteilhafte Weiterbildungen ergeben sich aus den abhängigen Ansprüchen.

Der Vibrator weist einen Motor mit einer Rotorwelle, ein an der Rotorwelle angebrachtes Gewicht zum Erzeugen einer Vibration und Mittel zum Bestimmen der Ausrichtung des Gewichts auf. In einer Ruhelage richtet sich das an der Rotorwelle angebrachte Gewicht immer in Richtung der Gravitationskraft der Erde aus. Zur Lagebestimmung wird die Ausrichtung des Gewichts durch die Gravitationskraft der Erde in Drehrichtung um die Rotorwelle im Vergleich zu einer vorgegebenen Lage bestimmt. Durch diese Auswertung der aktuellen Ausrichtung der Rotorachse bzw. des Gewichts kann die relative Lage des Endgeräts zur Oberfläche detektiert werden.

In einer Weiterbildung der vorliegenden Erfindung wird die Ausrichtung des Gewichts durch die Gravitationskraft der Erde in Längsrichtung entlang der Rotorwelle im Vergleich zu einer vorgegebenen Lage bestimmt. Durch eine solche Bestimmung kann eine weitere Lageänderung detektiert werden. Dazu muss das Gewicht in Längsrichtung entlang der Rotorachse beweglich sein, wobei eine Anschlagerkennung an beiden Seiten der Rotorachse vorgesehen werden kann..

In einer bevorzugten Ausführungsform weisen die Mittel zum Bestimmen mehrere an der Rotorwelle angebrachte Schleifkontakte auf. Die Auswertung der Drehrichtung bzw. der relativen Lage des Rotors zum Rotor kann über solche an der Rotorwelle angebrachte Schleifkontakte erfolgen.

In einer Weiterbildung der vorliegenden Erfindung weisen die Mittel zum Bestimmen eine Lichtschranke auf. Über eine solche optische Erkennung kann ebenfalls die Rotorlage ermittelt werden.

In einer Weiterbildung der vorliegenden Erfindung weisen die Mittel zum Bestimmen eine Inkrementscheibe auf. Über die Inkrementscheibe kann ebenfalls eine Lageerkennung erfolgen, wobei eine Inkrementscheibe eine höhere Auflösung hinsichtlich des aktuellen Dreh- bzw. Neigungswinkels liefert.

In einer Weiterbildung der vorliegenden Erfindung weisen die Mittel zum Bestimmen einen Hallsensor auf. Mit Hilfe eines Hallsensors ist wiederum eine Lageerkennung möglich, wobei eine grobe Erkennung, d.h. eine Erkennung von zwei unterschiedlichen Lagen des magnetisierten exzentrischen Gewichts, möglich ist.

In einer bevorzugten Ausführungsform der vorliegenden Erfindung wirkt das Gewicht mit der Rotorwelle derart zusammen, dass eine Ausrichtung des Gewichts in Richtung der Gravitationskraft der Erde möglich ist und das Gewicht nicht überschwingt. Das Gewicht muss bei einer Bewegung des Vibrators frei schwingen können. Somit muss der Motor in der Weise ausgebildet sein, dass er im nichtaktiven Zustand eine Drehung der Rotorwelle bzw. des an der Rotorwelle befestigten Gewichts zulässt. Entsprechend muss eine Überschwingung des Gewichts ausgeschlossen werden. Unter Überschwingen wird dabei verstanden, dass sich die Rotorwelle mit dem Gewicht nicht in der Weise frei drehen kann, dass ein Einschwingen in eine Ruhelage zu lange dauert. Der Vibrator muss folglich so ausgebildet sein, dass ein Optimum zwischen zu freiem und nicht möglichem Schwingen erreicht wird.

Bei dem Endgerät handelt es sich bevorzugt um ein Mobilfunk-Endgerät. Das Endgerät weist einen erfindungsgemäßen Vibrator auf, wobei in Abhängigkeit von der bestimmten Ausrichtung des Gewichts des Vibrators eine Aktion in dem Endgerät initiiert wird.

In einer bevorzugten Ausführungsform wird in Abhängigkeit von der bestimmten Ausrichtung des Gewichts des Vibrators die Darstellung der Anzeigevorrichtung des Endgeräts um 180° gedreht. Befindet sich das Endgerät beispielsweise an einem Halsband um den Hals eines Nutzers und liegt das Endgerät auf der Brust auf, so erkennt das Endgerät mit Hilfe des Vibrators, wenn der Nutzer das Endgerät in die Hand nimmt und dreht. Entsprechend wird die Darstellung auf der Anzeigevorrichtung des Endgeräts um 180° gedreht. Hängt das Endgerät wieder an dem Halsband, so wird die Darstellung wieder um 180° gedreht, so dass dritte Personen, die das Endgerät betrachten, auch die Darstellung auf der Anzeigevorrichtung lesen können.

In einer Weiterbildung der vorliegenden Erfindung erfolgt in Abhängigkeit von der bestimmten Ausrichtung des Gewichts des Vibrators eine Menü-Steuerung des Endgeräts. Durch die bestimmte Ausrichtung kann detektiert werden, in welche Richtung der Nutzer das mobile Endgerät bewegt hat. Erfolgt eine doppelte Lageerkennung, d.h. eine Lageerkennung um die Rotorachse und entlang der Längsachse des Rotors, so ist auch eine Menü-Steuerung über die Lageerkennung denkbar. Möglich ist auch die Bewegung eines Cursors auf dem Anzeigefeld des Endgeräts durch eine entsprechende Bewegung des Endgeräts.

Die vorliegende Erfindung ermöglicht eine kostengünstige und platzsparende Lageerkennung. Alle neu auf dem Markt erhältliche Mobilfunk-Endgeräte weisen einen Vibrator zum Signalisieren von Anrufen auf. Bei der vorliegenden Erfindung werden somit Bauelemente, die in jedem Mobilfunk-Endgerät vorhanden sind, dazu verwendet, um eine zusätzliche Funktion auszuführen.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine schematische Darstellung eines Vibrators;
- Figur 2: eine schematische Darstellung eines Vibrators in Frontansicht;
- Figur 3: eine schematische Darstellung eines in einem mobilen Endgerät integrierten Vibrators;
- Figur 4: eine schematische Darstellung einer horizontalen Schwenkung eines mobilen Endgeräts bei entsprechender Lage des Vibrators;
- Figur 5: eine schematische Darstellung eines Ausführungsbeispiels für die Umschaltung der Ausgabevorrichtung und Steuerung eines Cursors;
- Figur 6: eine schematische Darstellung eines Vibrators in Vorderansicht und Seitenansicht; und
- Figur 7: eine schematische Darstellung der Achsenbewegung eines Vibrators bei entsprechender Neigung zur Detektierung einer weiteren Lageänderung in einer weiteren Ebene.

Die Figuren 1 und 2 zeigen einen bekannten Vibrator und wurden bereits in der Einleitung der Beschreibung beschrieben. In der nachfolgenden Beschreibung haben gleichlautende Bezugszeichen wiederum die gleiche Bedeutung.

Figur 3 zeigt eine schematische Darstellung eines mobilen Endgeräts 4, in welchem ein Vibrator mit einem Motor 1, einer Rotorwelle 2 und einem exzentrischen Gewicht 3 integriert ist. Je nach Lage des mobilen Endgeräts 4 richtet sich das Gewicht entlang der Gravitationskraft der Erde g aus.

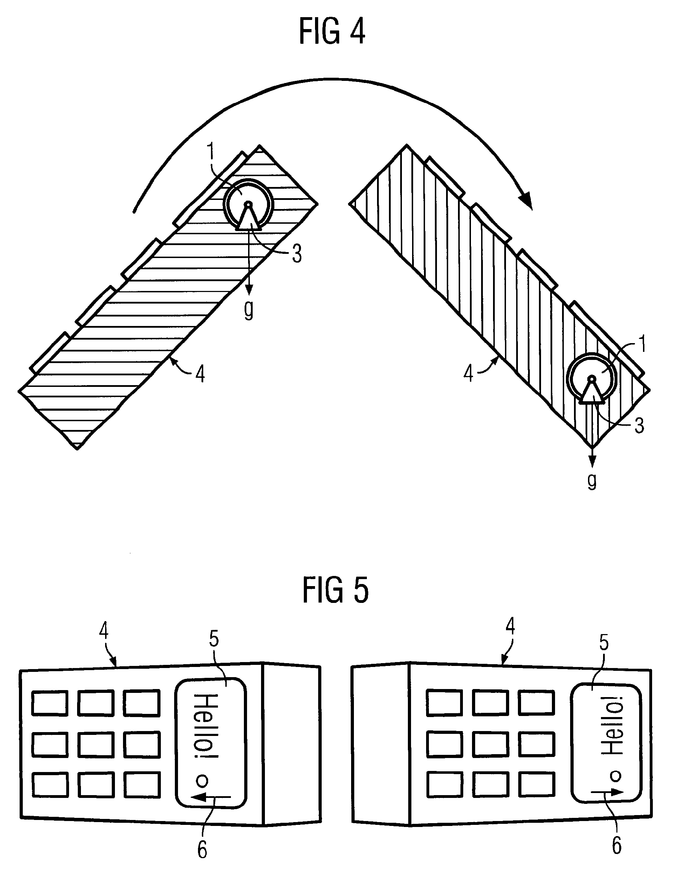

Figur 4 zeigt eine Ausrichtung des Gewichts 3 bei einer Schwenkung eines mobilen Endgeräts 4. Das Gewicht 3 richtet sich in beiden Fällen entlang der Gravitationskraft der Erde g aus.

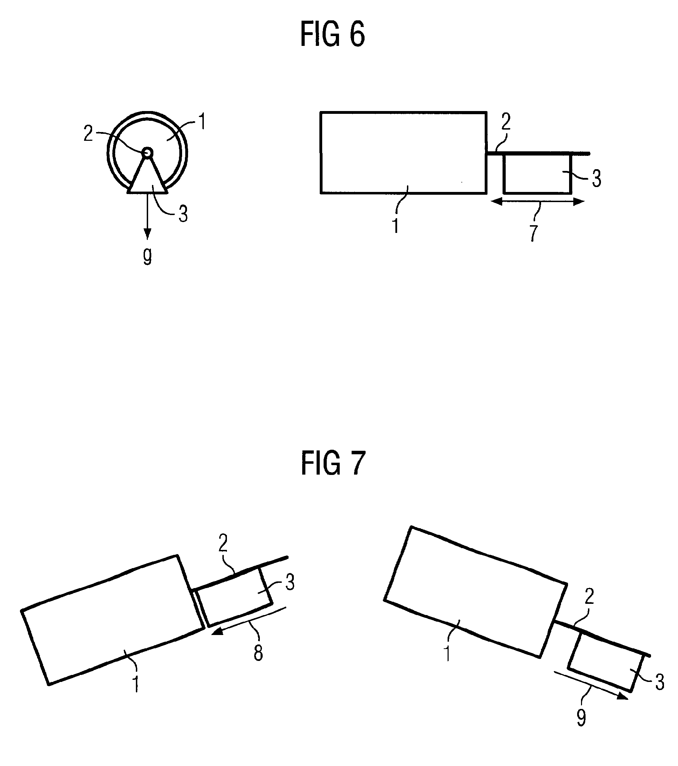

Figur 5 zeigt zwei mobile Endgeräte 4 mit einer Anzeigevorrichtung 5, einem sogenannten "Display", und einem Cursor 6. Figur 5 zeigt eine Darstellung in Draufsicht der horizontalen Schwenkung gemäß Figur 4. In der linken Darstellung zeigt der Cursor 6 bei dem Endgerät nach unten und das Display zeigt eine lesbare Darstellung des Schriftzugs. Bei einer horizontalen Schwenkung, wie dies in der rechten Abbildung dargestellt ist, dreht sich entsprechend der Schriftzug um 180° und der Cursor 6 zeigt in die andere Richtung. Eine entsprechende Änderung erfolgt somit aufgrund der Lageänderung.

Figur 6 zeigt in der linken Darstellung wiederum einen Vibrator, wobei in der rechten Darstellung verdeutlicht wird, wie eine Lageänderung in einer weiteren Ebene detektiert werden kann. In der rechten Darstellung ist wiederum die Rotorachse 2 mit dem elektrischen Motor 1 verbunden, wobei das exzentrische Gewicht 3 an der Rotorwelle befestigt ist. Zusätzlich zu den vorangegangenen Ausführungsbeispielen ist in dem Ausführungsbeispiel gemäß Figur 6 eine Bewegung des Gewichts entlang der Rotorachse 2 möglich, wie dies durch den Doppelpfeil 7 angedeutet ist. Für eine Lagedetektion kann dabei eine Anschlagerkennung links bzw. rechts (nicht eingezeichnet) vorgesehen sein. Andere Möglichkeiten zur Lageerkennung sind denkbar.

Figur 7 zeigt eine schematische Darstellung einer Bewegung des Vibrators gemäß Figur 6. Bei der in der linken Abbildung der Figur 7 gezeigten Neigung bewegt sich das Gewicht 3 entlang der Rotorwelle 2 in die Richtung 8. Entsprechend bewegt sich in der rechts gezeigten Abbildung das Gewicht 3 entlang der Rotorwelle 2 in die Richtung 9. Die Bewegungen können wiederum über eine Anschlagerkennung detektiert werden.

Die Lagedetektionen gemäß den Figuren 4 und 7 können auch kombiniert werden, so dass beispielsweise eine Bewegung eines Cursors auf einem Display in sämtliche Richtungen ermöglicht wird.

## Patentansprüche

1. Vibrator, aufweisend:
- einen Motor (1) mit einer Rotorwelle (2), und
- ein an der Rotorwelle angebrachtes Gewicht (3) zum Erzeugen einer Vibration,
**gekennzeichnet durch**
Mittel zum Bestimmen der Ausrichtung des Gewichts.

2. Vibrator nach Anspruch 1,
**dadurch gekennzeichnet, dass**
die Ausrichtung des Gewichts durch die Gravitationskraft der Erde in Drehrichtung um die Rotorwelle im Vergleich zu einer vorgegebenen Lage bestimmt wird.

3. Vibrator nach einem der vorhergehenden Ansprüche,
**dadurch gekennzeichnet, dass**
die Ausrichtung des Gewichts durch die Gravitationskraft der Erde in Längsrichtung entlang der Rotorwelle im Vergleich zu einer vorgegebenen Lage bestimmt wird.

4. Vibrator nach einem der vorhergehenden Ansprüche,
**dadurch gekennzeichnet, dass**
die Mittel zum Bestimmen mehrere an der Rotorwelle angebrachte Schleifkontakte aufweisen.

5. Vibrator nach einem der vorhergehenden Ansprüche,
**dadurch gekennzeichnet, dass**
die Mittel zum Bestimmen eine Lichtschranke aufweisen.

6. Vibrator nach einem der vorhergehenden Ansprüche,
**dadurch gekennzeichnet, dass**
die Mittel zum Bestimmen eine Inkrementscheibe aufweisen.

7. Vibrator nach einem der vorhergehenden Ansprüche,
**dadurch gekennzeichnet, dass**
die Mittel zum Bestimmen einen Hallsensor aufweisen.

8. Vibrator nach einem der vorhergehenden Ansprüche,
**dadurch gekennzeichnet, dass**
das Gewicht mit der Rotorwelle derart zusammenwirkt, dass eine Ausrichtung des Gewichts in Richtung der Gravitationskraft der Erde möglich ist, und das Gewicht nicht überschwingt.

9. Endgerät, insbesondere Mobilfunk-Endgerät, mit einem Vibrator nach einem der vorhergehenden Ansprüche,
**dadurch gekennzeichnet, dass**
in Abhängigkeit von der bestimmten Ausrichtung des Gewichts des Vibrators eine Aktion in dem Endgerät initiiert wird.

10. Endgerät nach Anspruch 9,
**dadurch gekennzeichnet, dass**
in Abhängigkeit von der bestimmten Ausrichtung des Gewichts des Vibrators die Darstellung der Anzeigevorrichtung (5) des Endgeräts um 180° gedreht wird.

11. Endgerät nach Anspruch 9 oder 10,
**dadurch gekennzeichnet, dass**
in Abhängigkeit von der bestimmten Ausrichtung des Gewichts des Vibrators eine Menüsteuerung des Endgeräts erfolgt.
